# EUROPEAN PATENT APPLICATION

(11) **EP 3 456 489 A1**
(43) Date of publication of application: **20.03.2019**
(21) Application number: 17796149.7
(22) Date of filing: 09.05.2017
(51) Int. Cl.: B25J 9/22, G05B 19/42

(54) **ROBOT INSTRUCTING APPARATUS**

(30) Priority: 11.05.2016 JP 2016095663
(71) Applicant: Kawasaki Jukogyo Kabushiki Kaisha, Kobe-shi, Hyogo 650-8670 (JP)
(72) Inventor: MUNETO, Koji, Akashi-shi Hyogo 673-8666 (JP)
(74) Representative: Müller-Boré & Partner Patentanwälte PartG mbB
(86) International application number: PCT/JP2017/017579
(87) International publication number: WO 2017/195788

(57) **Abstract**

A robot teaching apparatus (1) includes a portable terminal device (2) having a display unit (9) for displaying control contents of the robot, an input unit (9) for inputting the control contents of the robot, and a communication unit for communicating with the outside, and a robot operation portion (3) having a safety securing unit (4) for securing safety operation of the robot, and a communication unit for communicating with the portable terminal device. The portable terminal device (2) is detachably connected to the robot operation portion (3). This device enables use of the portable terminal device in the teaching of robot operation and has a safety function which works reliably.

## Description

### Technical Field

The present invention relates to a teaching apparatus which is communicably connected to a robot control device for controlling a robot and teaches an operation to the robot.

### Background Art

Recent popularization and improvement of functionality of terminal devices such as a mobile phone, a multifunctional mobile phone terminal (smartphone), a tablet terminal, and the like (hereinafter referred to as "portable terminal device") are impressive. They are being used not only for the call function but also for e-mail, internet use, creation and editing of documents, and also operation of household electrical products, and the like, and they have the function of a portable (mobile) computer.

Then, proposals have been made to use such a portable terminal device as a teaching apparatus of a robot

For example, in Patent Documents 1 and 2, a proposal has been made to use a tablet PC, a mobile phone terminal, a smartphone, or the like as a teaching apparatus of a robot (paragraph [0029] of Patent Document 1).

Further, for example, in Patent Document 2, a proposal has been made to use a mobile phone terminal or a portable information terminal (PDA) as an external device of a teaching apparatus (pendant) 3, and further a proposal has been made to integrate these terminals and the teaching apparatus (paragraph [0063]).

Now, when teaching motion to the robot, usually a teacher or a worker enters the operation range of the robot and performs work in many cases. Therefore, in order to secure the safety of the teacher or the like, there is a need for a safety device such as an emergency stop switch for emergency stop of an unexpected operation of the robot, and an activation permission switch, which is called trigger key or the like, allowing the braking of the operation motor of the robot to be canceled only while the key is being pressed. Then, in order to ensure reliable operation, these safety devices need to be equipped not as software but as hardware (mechanical equipment).

However, all the proposals in the teaching apparatus using the portable terminal device in the patent document mentioned above are intended to realize the function of the teaching apparatus as software. Additionally, no proposal, disclosure or suggestion has been made on the safety device (function) required for the teaching apparatus. Therefore, it cannot be actually used as a teaching apparatus.

### Citation List

### Patent Document

[Patent Document 1] Japanese Patent Application Laid-open No. 2016-13590
[Patent Document 2] Japanese Patent Application Laid-open No. 2012-218029

### Summary of Invention

### Objects to be Achieved by the Invention

The present invention is made considering the above-mentioned problems of the conventional technology, and its object is to provide a robot teaching apparatus which enables use of the portable terminal device in the teaching of robot operation and has a safety function which works reliably.

### Means for Achieving the Objects

In order to achieve the above-mentioned objects, a first aspect of the present invention is a teaching apparatus communicatively connected to a robot control device for controlling the robot so as to teach operation to the robot: comprising, a portable terminal device having a display unit for displaying control contents of the robot, an input unit for inputting the control contents of the robot, and a communication unit for communicating with the outside; and a robot operation portion having a safety securing unit for securing safety operation of the robot, and a communication unit for communicating with the portable terminal device, wherein the portable terminal device is detachably connected to the robot operation portion.

A second aspect of the present invention is that, in the first aspect, the robot operation portion comprises an operation unit for operating the robot.

A third aspect of the present invention is that, in the first or second aspect, the safety securing unit comprises an emergency stop unit for emergently stopping operation of the robot.

A forth aspect of the present invention is that, in any one of the first to third aspects, the safety securing unit comprises a start permission unit for permitting start of the robot.

A fifth aspect of the present invention is that, in the fourth aspect, the start permission unit is a press button type switch, and teaching operation of the robot is possible only while pressing a press button.

A sixth aspect of the present invention is that, in any one of the first to fifth aspects, the robot operation portion comprises an operating portion body having an operation unit for operating the robot, and a connecting portion which is configured according to the portable terminal device and is detachably connected to the portable terminal device, wherein the connecting portion is detachably connected to the operating portion body.

A seventh aspect of the present invention is that, in any one of the first to sixth aspects, communication between the communication unit of the portable terminal device and the communication unit of the robot operation portion is performed wirelessly.

An eighth aspect of the present invention is that, in any one of the first to seventh aspects, the display unit and the input unit in the portable terminal device include a touch panel.

### Advantageous Effect of the Invention

According to the present invention, there can be provided a robot teaching apparatus which enables use of a portable terminal device in teaching operation to the robot and has a safety function which works reliably.

### Brief Description of the Drawings

FIG. 1 is a front view illustrating a structural concept of a first embodiment of a robot teaching apparatus according to the present invention.
FIG. 2 is a rear view illustrating the structural concept of the first embodiment of the teaching apparatus according to the present invention.
FIG. 3 is a top view illustrating the structural concept of the first embodiment of the teaching apparatus according to the present invention.
FIG. 4 is a cross-sectional view taken along the arrow AA in FIG. 3.
FIG. 5 is a cross-sectional view taken along the arrow BB in FIG. 3.
FIG. 6 is a cross-sectional view taken along the arrow CC in FIG. 3.
FIG. 7 is a cross-sectional view taken along the arrow XX in FIG. 5.
FIG. 8 illustrates the action of the locking mechanism of a pressing tool 10: (a) illustrating an unlocked state, (b) illustrating a locked state.
FIG. 9 is a front view illustrating a structural concept of a robot operation unit in the first embodiment of the teaching apparatus.
FIG. 10 is a rear view illustrating the structural concept of the robot operation unit in the first embodiment of the teaching apparatus.
FIG. 11 is a front view illustrating a structural concept of an operation unit body in the first embodiment of the teaching apparatus.
FIG. 12 is a rear view illustrating a structural concept of an operation unit body in the first embodiment of the teaching apparatus.
FIG. 13 is a block diagram illustrating a system such as a main control, power supply, and the like in the first embodiment of the teaching apparatus.
FIG. 14 is a front view illustrating a structural concept of a second embodiment of a teaching apparatus according to the present invention.
FIG. 15 is a rear view illustrating the structural concept of the second embodiment of the teaching apparatus according to the present invention.
FIG. 16 is a top view illustrating the structural concept of the second embodiment of the teaching apparatus according to the present invention.
FIG. 17 is a right side view illustrating the structural concept of the second embodiment of the teaching apparatus according to the present invention.

### Embodiment of the Invention

<First embodiment> Hereunder, a first embodiment of a robot teaching apparatus according to the present invention will be described referring to the drawings.

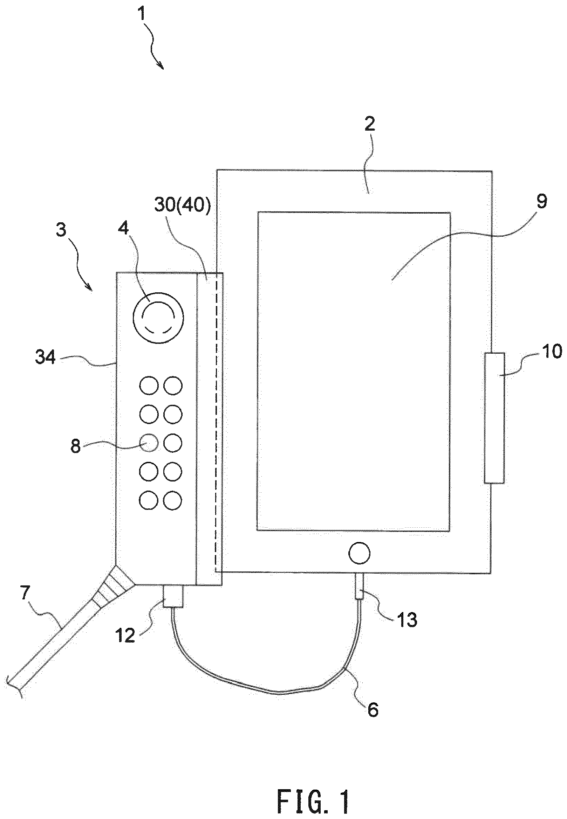

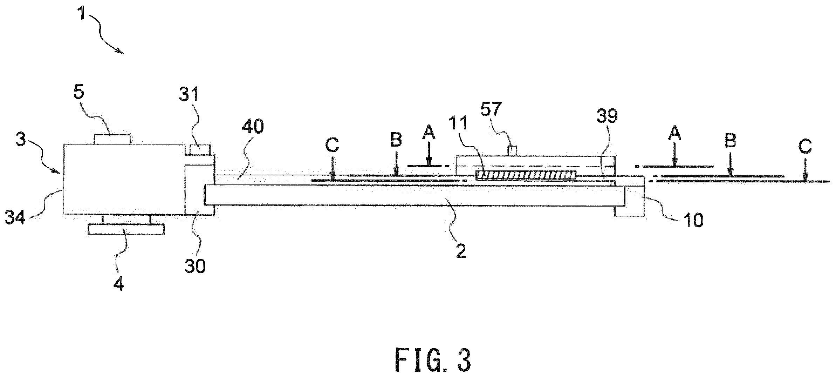

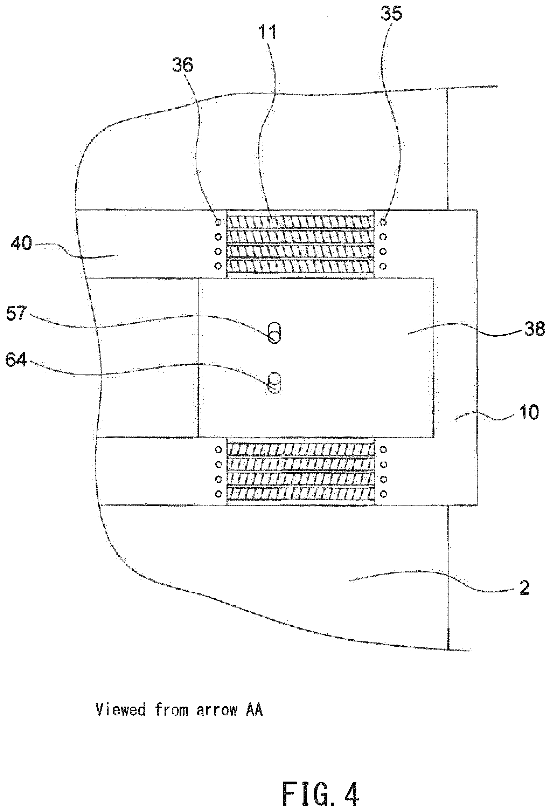

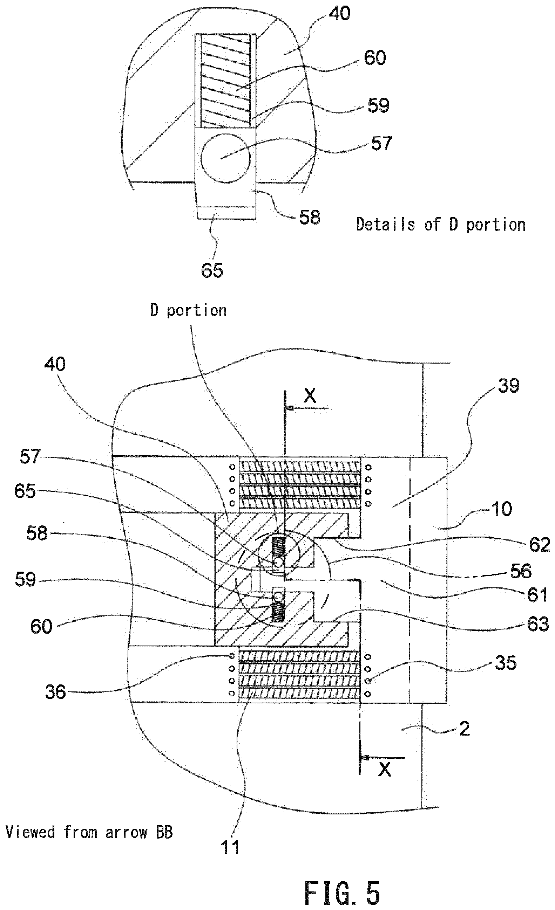

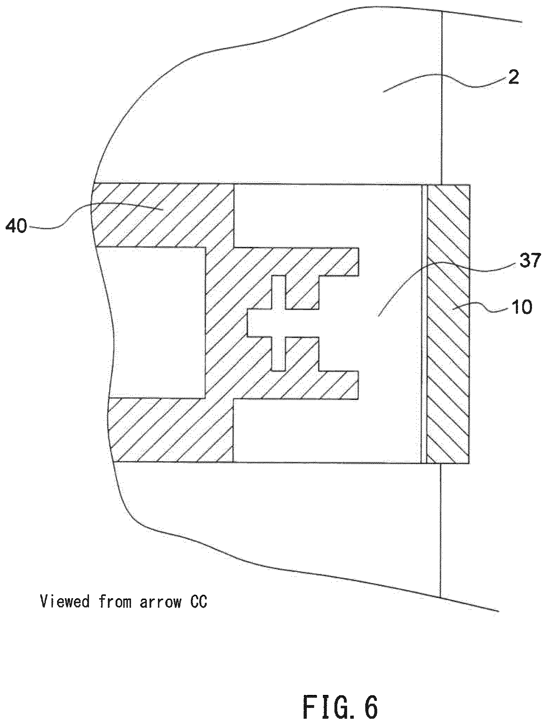

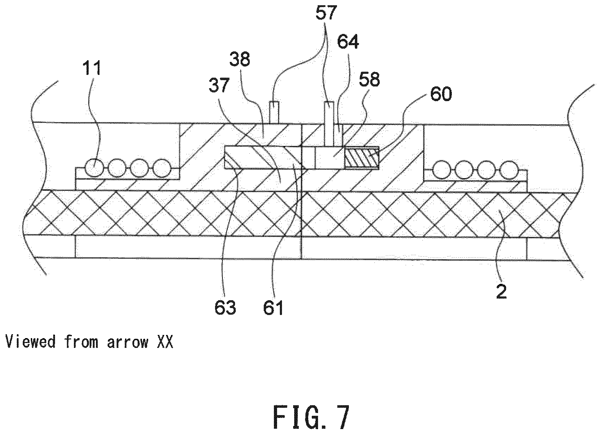

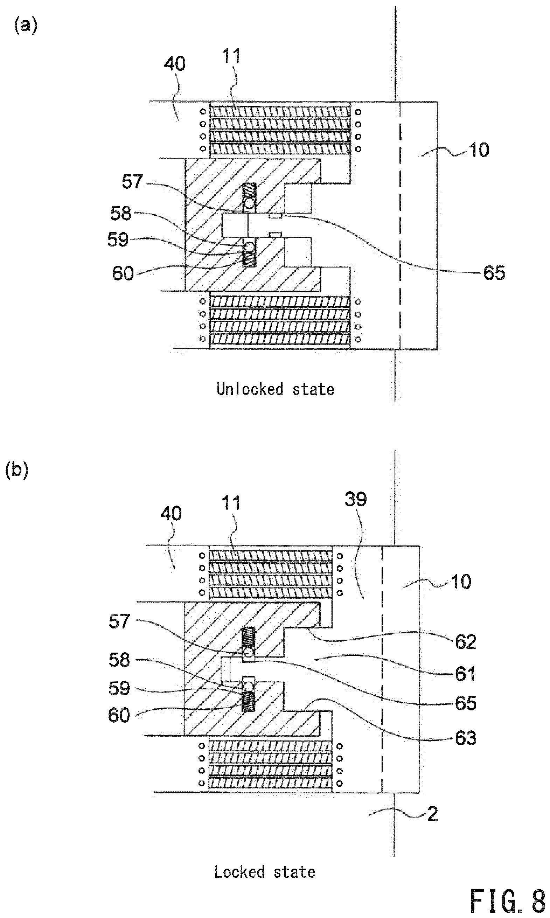

FIG. 1 to FIG. 3 are a front view, a rear view, and a top view illustrating a structural concept of a robot teaching apparatus according to this embodiment, respectively. FIG. 4 to FIG. 6 are cross-sectional views taken along the arrows AA, BB, and CC in FIG. 3, respectively. FIG. 7 is a cross-sectional view taken along the arrow XX in FIG. 5. FIG. 8 illustrates the action of the locking mechanism of the pressing tool.

As illustrated in FIG. 1 to FIG. 3, a robot teaching apparatus 1 according to this embodiment comprises a robot operation unit 3 and a tablet terminal 2 which is a portable terminal device detachably connected to the robot operation unit 3.

In the robot operation unit 3, operation buttons 8 and an emergency stop button 4 are disposed on the front side, and a trigger switch 5 is disposed on the back side. The emergency stop button 4 and the trigger switch 5 configure a safety securing unit for securing the safe operation of the robot.

When teaching the robot by using the teaching apparatus 1, the teacher usually holds a main portion 34 of the robot operation unit 3 and teaches

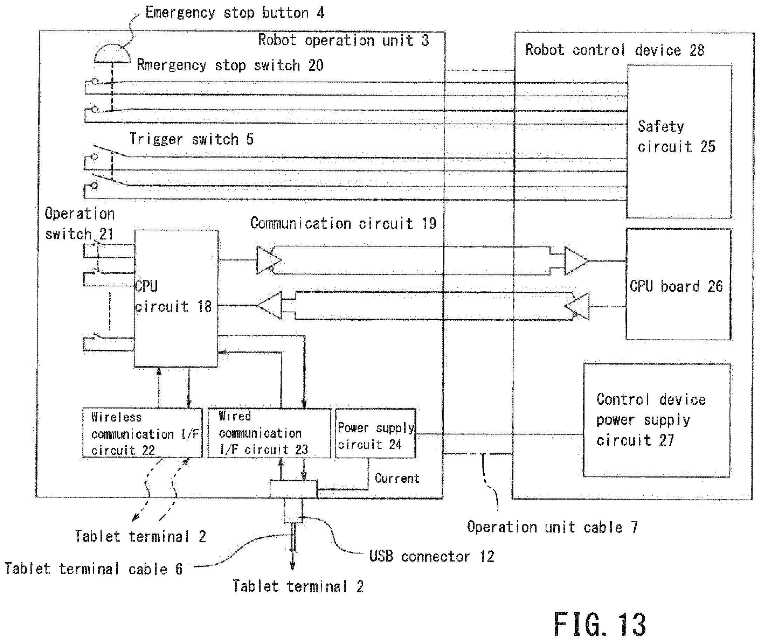

The robot operates only while pressing the trigger switch 5, and does not operate unless it is pressed. Therefore, when the teacher operates the robot to position at a predetermined position or the like, the trigger switch 5 is kept pressed by the second to fifth fingers of the hand holding the robot operation unit 3, and the trigger switch 5 is released as appropriate after the operation is finished. A safety circuit 25 in a robot control device 28 processes permission or non-permission of operation of the robot by the on/off signal of the trigger switch 5 (refer to FIG. 13). Thereby, unexpected operation, runaway, and the like of the robot during teaching work can be prevented. Note that the trigger switch 5 may be disposed on the front side of the robot operation unit 3 and pressed with the thumb.

Further, the emergency stop button 4 is used to emergently stop the operation of the robot in the case of an unexpected operation or runaway when causing the robot to perform a reproduction operation for checking a teaching operation or the like. When the emergency stop button 4 is pressed, an emergency stop switch 20 is turned off, and the signal is sent to the safety circuit 25 in the robot control device 28 to stop the robot (refer to FIG. 13).

The operation button 8 is a button for turning on/off an operation switch 21 for switching the operation or the like in the teaching operation. An on/off signal of the operation switch 21 is transmitted to the control device 28 by a communication circuit 19 and processed by a CPU board 26.

The signal of the operation switch 21, the input data from the tablet terminal 2, the data such as the state of the robot of the robot control device 28, and the like are interlocked as appropriate. Communication between the robot control device 28 and the tablet terminal 2 or the like at the time of instruction work is processed by a CPU circuit 18 according to an instruction from the tablet terminal 2.

Note that communication in the communication circuit 19 is performed by a method such as RS-422 or Ethernet (registered trademark).

The teaching apparatus 1 illustrated in FIGS. 1 to 3 is mainly arranged for right-handed teachers. It is possible to correspond to left-handed teachers by attaching the tablet terminal 2 having a symmetrical shape to FIG. 1 and the like on the opposite side of the robot operation unit 3.

Many of the tablet terminals 2 on the market are adapted to switch the orientation of the touch panel automatically or manually according to the orientation of the tablet terminal 2 such as up and down. When such a tablet terminal 2 is used, the arrangement of the emergency stop button 4 and the like is inverted upside down from the case of using it for right handedness, but it is possible to correspond only by inverting the tablet terminal 2 upside down.

In this embodiment, in order to make it possible to use many kinds of tablet terminals having different shapes and the like which are generally commercially available as the tablet terminal 2, the robot operation unit 3 is configured to use a common operation unit body 34, while exchanging only an attachment 30 corresponding to various kinds of tablet terminals 2 having different shapes or the like to use it. This aims improvement of the convenience of the teacher, cost reduction, and the like. Hereinafter, its structural concept will be described.

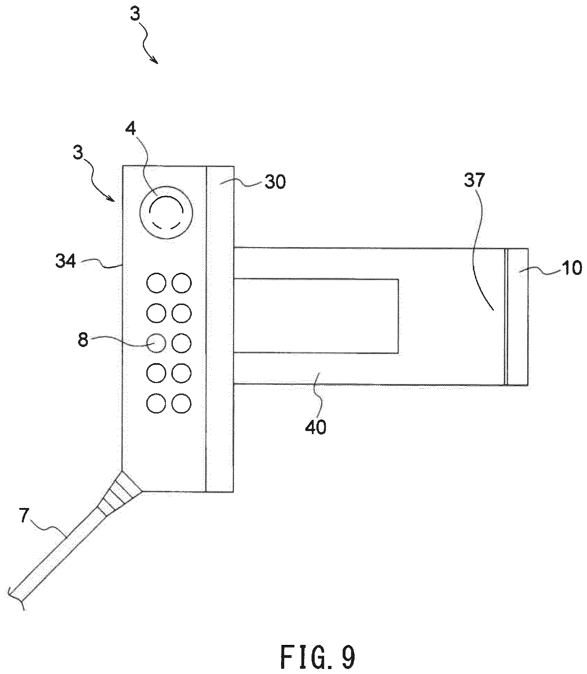

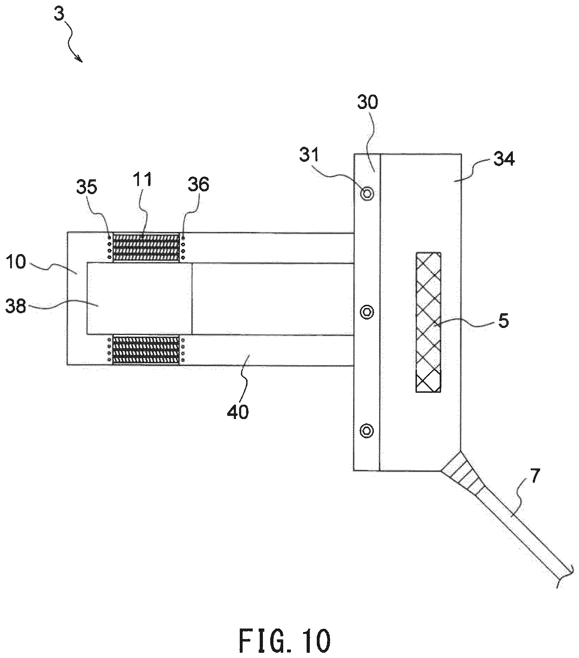

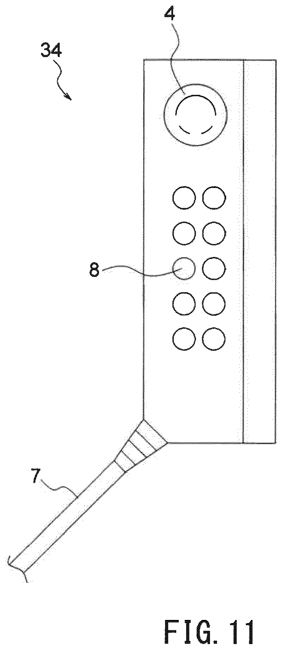

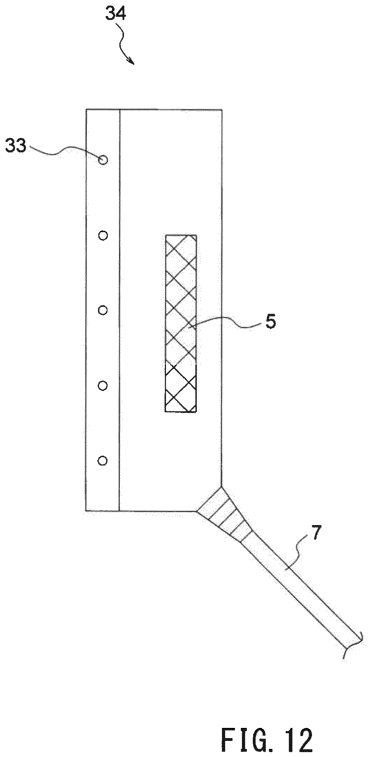

FIGS. 9 and 10 are a front view and a rear view illustrating a structural concept of the robot operation unit 3, respectively. FIGS. 11 and 12 are a front view and a rear view illustrating a structural concept of the operation unit body, respectively.

The robot operation unit 3 comprises the operation unit body 34 and the attachment 30. The side surface of the attachment 30 is connected to the side surface of the operation unit body 34, then a bolt 31 is pierced through a bolt through hole 33 formed in the operation unit body 34 from the back surface and screwed to a tap hole (female screw) formed in the attachment 30 so that the attachment 30 is fixed to the operation unit body 34. Accordingly, when different kinds of tablet terminals 2 are used, the attachment 30 corresponding to the shape of the type of tablet to be used is prepared as necessary, so that the common operation unit body 34 can be used.

Note that, in the operation unit body 34, a large number of tap holes are arranged at appropriate intervals so that the attachment 30 corresponding to the portable terminal device including the smartphone and the like can be attached.

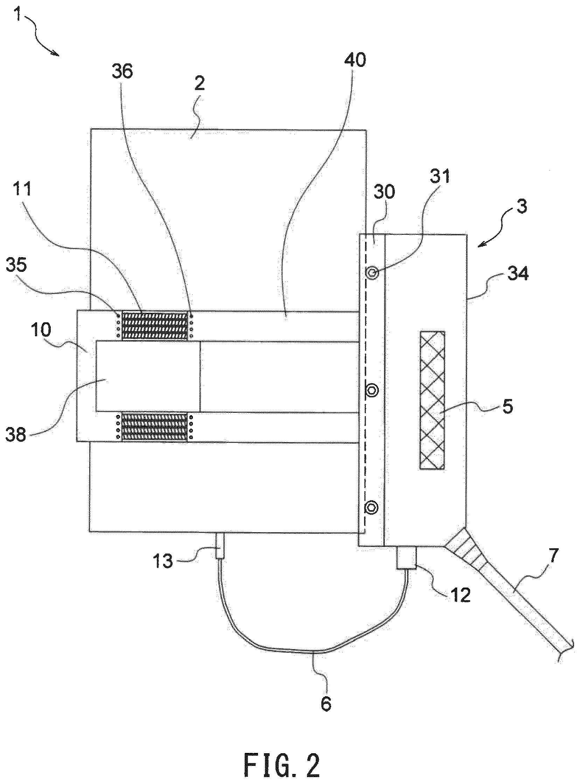

In the attachment 30, an attachment body 40 attached to the operation unit body 34 and the pressing tool 10 for pressing the tablet terminal 2 are connected via a spring 11. In order to reduce the thickness of the attachment 40, a plurality of springs 11 with small outer diameters (four in each end portion in the width direction in FIG. 2, and the like) are disposed in the width direction.

One end of each spring 11 is attached to a body side fixing portion 36 of the attachment body 40 and the other end is attached to a pressing tool side fixing portion 35 of a flange 39 protruding from the pressing tool 10 which is movable in the left-right direction of the page of FIG. 2.

Further, in order to improve ease of handling by teachers and the like, in the pressing tool 10, a protruding plate 61 (refer to FIG. 5) protruding from the flange 39 toward the attachment body 40 is sandwiched between a plate-like front guide plate 37 and a rear guide plate 38 protruding from the attachment body 40 in the front-rear direction (the side of the tablet terminal 2 is front), and between an upper guide portion 62 and a lower guide portion 63 protruding from the attachment body 40 in the vertical direction (vertical direction of the page of FIG. 1 or FIG. 5) and slidably connected.

By the guides in the front-rear direction and the vertical direction (front guide plate 37 and rear guide plate 38, and upper guide portion 62 and lower guide portion 63), the pressing tool 10 is constrained in the (movement in) front-rear direction and the vertical direction.

Further, in order to restrict the movement of the pressing tool in the left-right direction (the left-right direction in FIG. 5) after the connection of the pressing tool 10 to the attachment body 40 is completed, a lock mechanism 56 illustrated in FIG. 5 is provided.

Hereinafter, the action of the lock mechanism will be described based on FIG. 8.

FIG. 8(a) illustrates a state where the pressing tool 10 is unlocked, and FIG. 8(b) illustrates a state where the pressing tool 10 is locked.

Lock grooves 65 are formed on both side surfaces of the distal end portion of the protruding plate 39. Further, fixing members 58 are pressed against both side surfaces of the distal end portion of the protruding plate 39 from the outside by springs 60 in slide grooves 59.

When the hand is released from the state (state where the pressing tool 10 is held by hand or the like to stretch the spring 11) illustrated in FIG. 8 (a), due to the restoring force of the spring 11, the pressing tool 10 and the protruding plate 39 integrated with the pressing tool 10 are moved to the left in the page, and when the lock grooves 65 on both side surfaces of the distal end portion of the protruding plate 39 reach the position of the fixing members 58, the fixing members 58 are inserted and fitted into the lock grooves 65 by the pressing force of the springs 60. Thus, the fixing of the pressing tool 10 is completed.

Note that, in order to press the end surface of the tablet terminal 2 without a gap in a state where the pressing tool 10 is locked by the lock mechanism 56, when the inner surface of the pressing tool 10 comes into contact with the end surface of the tablet terminal 2, the lock groove 65 is disposed at the position of the fixing member 58. Further, in order to fit the fixing member 58 into the lock groove 65 with a small pressing force and to amplify the pressing force of the tablet terminal 2 by the pressing tool 10, the surface of the fixing member 58 on the front side in the progressing direction of the pressing tool 10 has a small angle slope. Accordingly, in order to more securely hold the tablet terminal 2 by the pressing tool 10, it is preferable that a rubber or the like is disposed at the contact portion of the pressing tool 10 to the tablet terminal 2 and further a protrusion having a pattern such as a wavy shape or a lattice shape is formed on the surface of the rubber.

Further, in order to secure and improve the connection between the tablet terminal 2 and the robot operation unit 3 (attachment 30), each of the attachment body 40 and the pressing portion of the pressing tool 10 pressed against the tablet terminal 2 has a groove whose cross section is shaped to conform to the cross-sectional shape of the end portion of the tablet terminal 2 (for example, substantially U-shaped).

An unlock pin 57 for unlocking the lock mechanism 56 is disposed on the surface on the back side (the front side of the page in FIG. 5) of the pair of left-right fixing members 58, and passes through a guide hole 64 formed through the rear guide plate 38, and the distal end thereof protrudes from the surface of the rear guide plate 38.

When unlocking the lock mechanism 56, the distal ends of the pair of unlock pins 57 are drawn towards each other with a finger or the like so that the fixing member 58 is pulled out from the lock groove 65, and the pressing tool 10 from which the restraint has been released is separated from the tablet terminal.

With the above configuration, the tablet terminal 2 is constrained from moving in the vertical and left-right directions within the surface of the tablet terminal 2 and in the direction perpendicular to the surface by the attachment 30, and is connected to the attachment 30 and eventually to the robot operation unit 3 to be integrated, and therefore it never falls or dropouts from the robot operation unit 3.

FIG. 13 is a block diagram illustrating a system such as a main control, power supply, and the like of the teaching apparatus.

The robot operation unit 3 is connected to the robot control device 28 which controls a robot (not illustrated) by an operation unit cable 7. A signal line and a power supply line are disposed in the operation unit cable 7. Signal transmission/reception (communication) between the robot operation unit 3 and the robot control device 28 is performed by the signal line, and power (electric current) is supplied from the robot control device to the robot operation unit 3 by the power supply line. Further, a control device power supply circuit 27 in the robot control device 28 and a power supply circuit 24 in the robot operation unit 3 are connected.

Signal transmission/reception (communication) is performed between the robot operation unit 3 and the tablet terminal 2 by wireless communication using a wireless communication I/F circuit 22 or wired communication using a wired communication I/F circuit 23. Setting of various parameters for teaching, input of teaching point for teaching operation of the robot arm, and display of operation state of the robot are performed by a touch panel (touch panel type liquid crystal display) 9 of the tablet terminal 2. The touch panel 9 configures display unit and input unit of the tablet terminal (portable terminal device) 2.

Note that, as a wireless communication method between the robot operation unit 3 and the tablet terminal 2, a method based on Bluetooth (registered trademark) standard or Wi-Fi (registered trademark) standard is preferably adopted from the viewpoint of versatility and reliability.

Since the use time of the built-in battery may be short when the tablet terminal 2 is continuously used, in order not to hinder the teaching work, the robot operation unit 3 and the tablet terminal 2 are connected by a tablet terminal cable 6 having a tablet connector 13 so that power (electric current) can be supplied to the tablet terminal 2. Further, in consideration of instability of wireless communication and the like, the table terminal cable 6 also incorporates a communication line so that, when the robot operation unit 3 and the tablet terminal 2 are connected by the tablet terminal cable 6, a wired communication method is also possible.

Note that the tablet terminal cable 6 uses a USB connector 12 as a terminal connected to the robot operation unit 3 so that a cable attached to the tablet terminal to be used can also be used

Further, as to the communication between the tablet terminal 2 and the robot operation unit 3, either one of the wired method and the wireless method is adopted depending on the usage method and the purpose, thereby simplifying the system of the teaching apparatus 1 and reducing the cost.

Additionally, although the example where the tablet terminal 2 is used as the portable terminal device is described above, the portable terminal device is not limited to the tablet terminal 2, and a mobile phone, a multifunctional mobile phone terminal (smart phone) or the like can be used. Additionally, although the tablet terminal of the touch panel type liquid crystal device (display device) which combines the display device and the input device is used for explanation in consideration of the operability and the size of the display screen, needless to say, it is possible to use separate and independent display device and input device (for example, keyboard).

As described above, the robot teaching apparatus 1 according to this embodiment can be used for various portable terminal devices. Also in that case, it is possible to reduce the cost of the whole system by using the common operation unit body 34 and exchanging the attachment corresponding to the type and shape of the portable terminal device.

<Second embodiment> Hereunder, a second embodiment of a robot teaching apparatus according to the present invention will be described referring to the drawings.

Note that, in the following description, the explanation will be focused on the matters different from those in the first embodiment, and matters not specifically described are the same as in the first embodiment unless there is contradiction or the like.

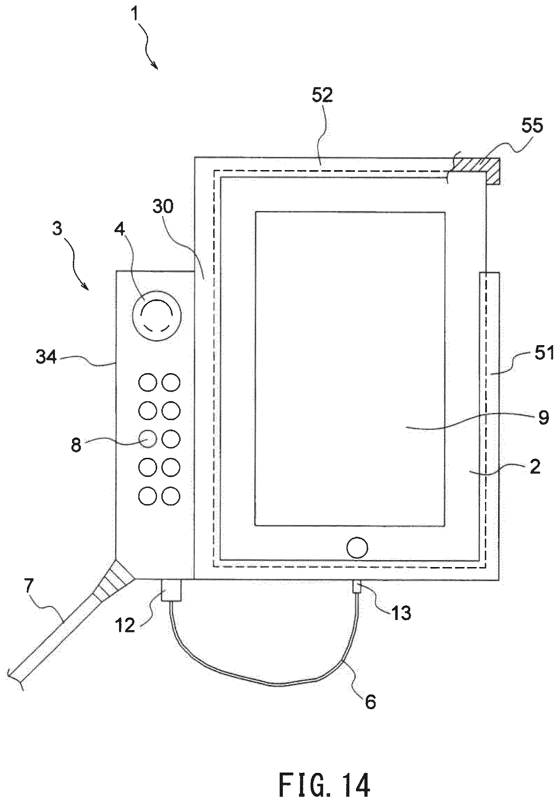

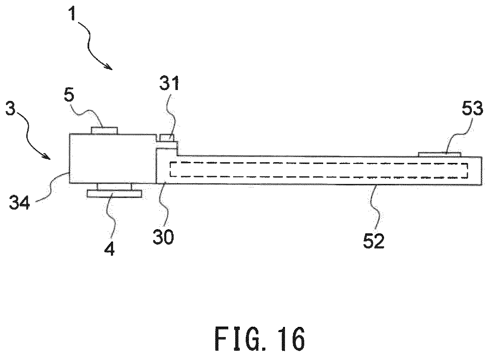

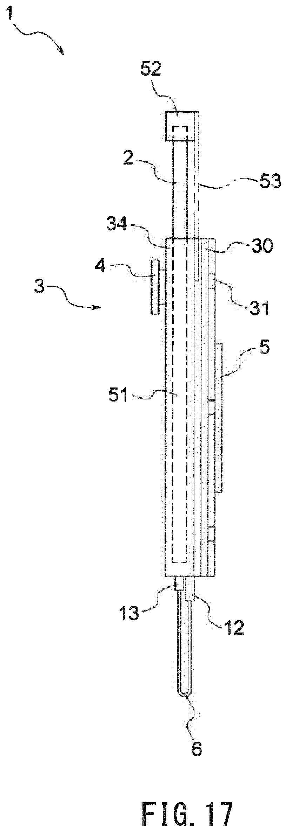

FIG. 14 to FIG. 17 are a front view, a rear view, a top view, and a right side view illustrating a structural concept of the second embodiment of the robot teaching apparatus according to the present invention, respectively.

The structure of the teaching apparatus 1 of the second embodiment comprises the robot operation unit 3 and a tablet terminal 2 which is a portable terminal device detachably connected to the robot operation unit 3, as the first embodiment.

Additionally, also in the robot operation unit 3 of the second embodiment, the operation unit body 34 and the attachment (connecting portion) 30 are detachably connected, and the structure of the operation unit body 34 is the same as that in the first embodiment.

The attachment 30 comprises a frame portion 51 into which a portion lower than the center of the tablet terminal 2 is inserted from above to be stored, and a fixing portion 52 for pressing down and pinching the tablet terminal 2 stored in the frame portion 51 from above to fix it.

In the inner circumference portion of the frame portion 51 and the fixing portion 52, a groove whose cross section is shaped to conform and fit to the shape of the outer edge portion of the tablet terminal 2 (for example, substantially U-shaped).

As illustrated in FIG. 14, the tablet terminal 2 is constrained by a hook-shaped hook portion 55 of the distal end portion of the fixing portion 52 at the upper right portion of the page. Therefore, in particular, the fixing portion 52 can secure rigidity for fixing while securing elasticity by using synthetic resin, for example.

Note that, when a material having low rigidity is used for the fixing portion 52, the tablet terminal 2 can be used by using together (combining) a plate spring or the like of metal or the like having the a hook-shaped distal end portion that the hook portion 55 elastically deforms vertically with the portion on the robot operation unit 3 side of the fixing portion 52 as a fulcrum.

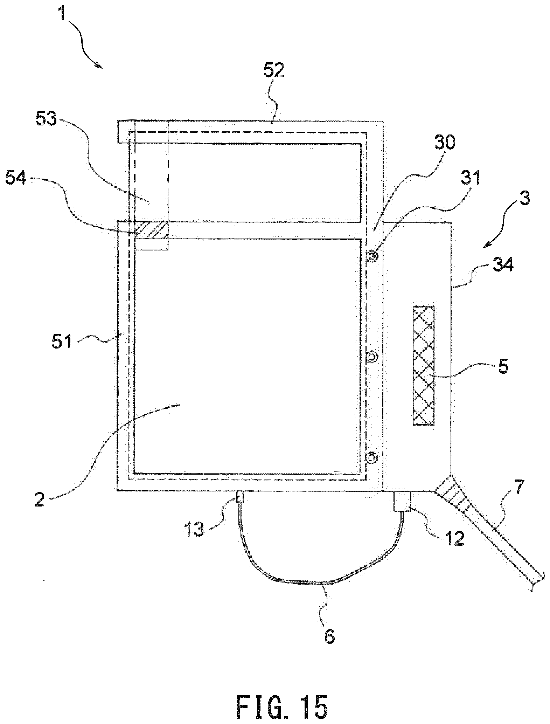

Furthermore, in order to prevent the hook portion 55 for the tablet terminal 2 from coming off, as necessary, it is preferable that a fixing band 53 is attached to the fixing portion 52 on the back surface side of the tablet terminal 2, and the fixing portion 52 and the frame portion 51 are connected and fixed by a hook-and-loop fastener portion 54 at the lower portion of the fixing band 53 and the hook-and-loop fastener portion 54 at the upper portion of the frame portion 51, as illustrated in FIG. 15.

As described above, according to each of the above-described embodiments, a teaching apparatus comprising a safety device capable of securing reliable operation by mechanically operating using a general-purpose device such as a portable terminal device can be provided. Additionally, since a general-purpose device is used as a teaching apparatus, the cost of the general-purpose device itself can be reduced, and also the cost of the entire system can be reduced by combining it with the robot control device, and the function can be improved and expanded easily.

### Description of Reference Numerals

- 1: ... teaching apparatus
- 2: ... tablet terminal
- 3: ... robot operation unit
- 4: ... emergency stop button (safety securing unit)
- 5: ... trigger switch (safety securing unit)
- 6: ... tablet terminal cable
- 7: ... operation unit cable
- 8: ... operation button
- 9: .. touch panel
- 10: ... pressing tool
- 11: ... spring
- 12: ... USB connector
- 13: ... tablet connector
- 18: ... CPU circuit
- 19: ... communication circuit
- 20: ... emergency stop switch
- 21: ... operation switch
- 22: ... wireless communication I/F circuit
- 23: ... wired communication I/F circuit
- 24: ... power supply circuit
- 25: ... safety circuit
- 26: ... CPU board
- 27: ... control device power supply circuit
- 28: ... robot control device
- 30: ... attachment (connecting portion)
- 31: ... bolt
- 33: ... bolt through hole
- 34: ... operation unit body
- 35: ... pressing tool side fixing portion
- 36: ... body side fixing portion
- 37: ... front guide plate
- 38: ... rear guide plate
- 39: ... flange
- 40: ... attachment body
- 51: ... frame portion
- 52: ... fixing portion
- 53: ... fixing band
- 54: ... hook-and-loop fastener portion
- 55: .. hook portion
- 56: ... lock mechanism
- 57: ... unlock pin
- 58: ... fixed member
- 59: ... slide groove
- 60: ... spring
- 61: ... protruding plate
- 62: ... upper guide portion
- 63: ... lower guide portion
- 64: ... guide hole
- 65: ... lock groove

## Claims

1. A teaching apparatus communicatively connected to a robot control device for controlling a robot so as to teach an operation to the robot: comprising,
a portable terminal device having a display unit for displaying a control content of the robot, an input unit for inputting the control content of the robot, and a communication unit for communicating with an outside; and
a robot operation portion having a safety securing unit for securing a safety operation of the robot, and a communication unit for communicating with the portable terminal device,
wherein the portable terminal device is detachably connected to the robot operation portion.

2. The teaching apparatus according to claim 1,
wherein the robot operation portion comprises an operation unit for operating the robot.

3. The teaching apparatus according to claim 1 or 2,
wherein the safety securing unit comprises an emergency stop unit for emergently stopping an operation of the robot.

4. The teaching apparatus according to any one of claims 1 to 3,
wherein the safety securing unit comprises a start permission unit for permitting a start of the robot.

5. The teaching apparatus according to claim 4,
wherein the start permission unit is a press button type switch, and a teaching operation of the robot is possible only while pressing a press button.

6. The teaching apparatus according to any one of claims 1 to 5,
wherein the robot operation portion comprises an operating portion body having an operation unit for operating the robot, and a connecting portion which is configured according to the portable terminal device and is detachably connected to the portable terminal device, and
wherein the connecting portion is detachably connected to the operating portion body.

7. The teaching apparatus according to any one of claims 1 to 6,
wherein a communication between the communication unit of the portable terminal device and the communication unit of the robot operation portion is performed wirelessly.

8. The teaching apparatus according to any one of claims 1 to 7,
wherein the display unit and the input unit in the portable terminal device include a touch panel.
